# EUROPEAN PATENT APPLICATION

(11) **EP 4 708 895 A1**
(43) Date of publication of application: **11.03.2026**
(21) Application number: 25184211.8
(22) Date of filing: 20.06.2025
(51) Int. Cl.: H04N 23/698, B60R 1/23, H04N 23/90

(54) **DEVICE FOR COMPOSITE VISION AND ASSOCIATED METHOD**

(30) Priority: 10.09.2024 IT 202400020182
(71) Applicant: FuzzyWaves S.r.l., 20025 Legnano (IT)
(72) Inventor: BAITINI, Mario, 20025 Legnano (IT); LOMBARDO, Simone, 20143 Milano (IT)
(74) Representative: PGA S.p.A., Milano, Succursale di Lugano

(57) **Abstract**

Method for promoting an increase of the view of a user, in particular of a user of a vehicle (1), the method comprising:
- providing a composite vision device (100) comprising at least a first camera (101) having at least a respective first field of view (FOV1) and a second camera (102) having at least a respective second field of view (FOV2), and arranging said first camera (101) and said second camera (102) in at least a first reciprocal positional relation in correspondence of at least a first predefined portion of said vehicle (1),
- framing a first portion of surrounding environment by means of said first camera (101) and a second portion of surrounding environment at least partially different, preferably substantially different, with respect to said first portion of surrounding environment by means of said second camera (102),
- electronically generating, by means of said first camera (101), at least a first image (11) or first set of images of said first portion of surrounding environment and electronically generating, by means of said second camera (102), at least a second image (12) or second set of images, of said second portion of surrounding environment,
- electronically generating at least a composite image (I) or a set of composite images, combining electronically said first image (11), or first set of images, with said second image (12), or second set of images, said composite image (I) promoting an increase of the view of said user.

## Description

### Field of the technique

The present disclosure refers to the field of the vision devices, in particular destined to vehicular applications.

Precisely, the present disclosure concerns a device for composite vision.

The present disclosure further concerns a method to promote an increase of the view of a user.

### Background art

Today vehicles are typically provided with cameras, that allow easing the view of a user. There are for example known reversing cameras, arranged in correspondence of the rear portion of the road vehicles. Such cameras are activated when in reverse, to help the view of the user of the vehicle.

Known type cameras can be provided with lenses with great wide-angle power, for increasing the width of the field of view, even if this determines distortions in the acquired image.

Lenses with great wide-angle power determine the need of high-resolution cameras; for correcting the distortions brought by the lens, the data processing units operatively associated to the cameras shall carry out significant image processing operations, that bring to a loss of resolution in the most peripheral regions of the image itself. In the known art, tries for compensating the loss of resolution in the most peripheral regions of the image are carried out with a greater overall resolution of the cameras. Anyway, with lenses with great wide-angle power, the central portion of the image has a great resolution but carries information that is slightly significant for the purpose of easing the user of the vehicle.

There are also known cameras arranged on the sides of the vehicles to frame portions of environment around the left and right side of the vehicle.

### Summary

The Applicant has conceived a device and a method targeted to promote the view of a user, that are described in the following aspects.

Such aspects can be combined between them or with portions of the detailed description and of the claims.

In accordance to a first independent aspect is herein described a device for composite vision (100), comprising at least a first camera (101) having at least a respective first field of view (FOV1) and a second camera (102) having at least a respective second field of view (FOV2),
wherein the first camera (101) and the second camera (102) are configured to be arranged in at least a first reciprocal positional relation in correspondence of at least a first predefined portion of a vehicle (1), in such a way to frame a first portion of surrounding environment and a second portion of surrounding environment at least partially different, preferably substantially different, with respect to said first portion of surrounding environment,
said first camera (101) being configured to electronically generate at least a first image (11) or first set of images of said first portion of surrounding environment, said second camera being configured to electronically generate at least a second image (12) or second set of images of said second portion of surrounding environment,
said device for composite vision (100) being configured to allow to electronically generate at least a composite image (I) or a set of composite images, deriving from an electronic combination of said first image (11), or first set of images, with said second image (12), or second set of images, to promote an increase of the view of a user of said vehicle (1).

According to a further non-limiting aspect, said at least a first reciprocal positional relation is a fixed positional relation. In other words the first camera (101) is arranged in a position fixed with respect to said second camera (102).

According to a further non-limiting aspect, there is a second reciprocal positional relation between said first camera (101) and said second camera (102).

According to a further non-limiting aspect, between said first reciprocal positional relation and said second reciprocal positional relation there is a movement of translation or of rotation or of roto-translation between said first camera (101) and said second camera (102).

According to a further non-limiting aspect, said first camera (101) and said second camera (102) are arranged in substantial proximity, preferably in substantial proximity of a same point of said first predefined portion of said vehicle (1).

According to a further non-limiting aspect, said device for composite vision (100) comprises a casing or body, said casing or body housing said first camera (101) and said second camera (102).

According to a further non-limiting aspect, said first camera (101) and said second camera (102) are arranged into a same casing or body.

According to a further non-limiting aspect, said device for composite vision (100) comprises at least an actuator, in use arranged in a predefined portion of said vehicle (1), and comprising an element movable for rotation and/or translation, on which at least one between said first camera (101) and said second camera (102) is fixed.

According to a further non-limiting aspect, said first camera (101) and said second camera (102) are enclosed in a single body and/or lay substantially in a same position of said at least a first predefined portion of said vehicle (1) and/or are substantially arranged in contact one with the other or substantially superimposed or juxtaposed.

According to a further non-limiting aspect, said actuator is configured to move in rotation, in translation, or in a composite motion of roto-translation, at least one between said first camera (101) and said second camera (102) between a first position on said first predefined portion of said vehicle and a second position on said first predefined portion of said vehicle, or between said first predefined portion of said vehicle and a second portion of said vehicle, different with respect to said first portion.

In accordance to a second independent aspect is herein described a method to promote an increase of the view of a user, in particular of a user of a vehicle (1), the method comprising:
- providing a composite vision device (100), optionally a composite vision device (100) according to one or more of the herein described aspects, comprising at least a first camera (101) having at least a respective first field of view (FOV1) and a second camera (102) having at least a respective second field of view (FOV2), and arranging said first camera (101) and said second camera (102) in at least a first reciprocal positional relation in correspondence of at least a first predefined portion of said vehicle (1),
- framing a first portion of surrounding environment by means of said first camera (101) and a second portion of surrounding environment at least partially different, preferably substantially different, with respect to said first portion of surrounding environment by means of said second camera (102);
- electronically generating, by means of said first camera (101), at least a first image (11) or first set of images of said first portion of surrounding environment and electronically generating, by means of said second camera (102), at least a second image (12) or second set of images, of said second portion of surrounding environment,
- electronically generate at least a composite image (I) or a set of composite images, combining electronically said first image (11), or first set of images, with said second image (12), or second set of images, said composite image (I) promoting an increase of the view of said user.

According to a further non-limiting aspect, the method comprises arranging said first camera (101) and said second camera (102) in at least a first reciprocal positional relation and in substantial proximity in correspondence of said at least a first predefined portion of said vehicle (1).

According to a further non-limiting aspect, said at least a first reciprocal positional relation is a fixed positional relation. In other words the first camera (101) is arranged in a position fixed with respect to said second camera (102).

According to a further non-limiting aspect, there is a second reciprocal positional relation between said first camera (101) and said second camera (102).

According to a further non-limiting aspect, the method comprises a movement of translation or of rotation or of roto-translation between said first camera (101) and said second camera (102) to bring said first camera (101) and said second camera (102) between said first reciprocal positional relation and said second reciprocal positional relation.

According to a further non-limiting aspect, the method comprises providing a casing or body, and comprises arranging first camera (101) and said second camera (102) in said body or casing.

According to a further non-limiting aspect, said method comprises arranging said body or casing in correspondence of said first predefined portion of said vehicle (1).

According to a further non-limiting aspect, the method comprises providing and/or activating at least an actuator, in use arranged in a predefined portion of said vehicle (1), and comprising an element movable by rotation and/or translation, on which at least one between said first camera (101) and said second camera (102) is fixed.

According to a further non-limiting aspect, the method comprises moving in rotation, in translation, or in a composite motion of roto-translation, at least one between said first camera (101) and said second camera (102) between a first position on said first predefined portion of said vehicle and a second position on said first predefined portion of said vehicle, or between said first predefined portion of said vehicle and a second portion of said vehicle, different with respect to said first portion.

According to a further non-limiting aspect, said first camera (101) and/or said second camera (102) are configured to receive an optical radiation belonging to the visible spectrum, ultraviolet and/or infrared.

According to a further non-limiting aspect, framing said first portion of surrounding environment by means of said first camera (101) and a second portion of surrounding environment at least partially different, preferably substantially different, with respect to said first portion of surrounding environment by means of said second camera (102) comprises acquiring by means of said first camera (101) and/or by means of said second camera (102) optical radiations belonging to the visible spectrum, ultraviolet and/or infrared.

According to a further non-limiting aspect, said predefined portion of said vehicle (1) is a peripheral portion of said vehicle, for example a peripheral front or rear portion of said vehicle (1).

According to a further non-limiting aspect, said composite image (I) comprises a juxtaposition of said first image (11) and of said second image (12) or a n-th image of said first set of images with a corresponding n-th image of said second set of images, or comprises a juxtaposition of at least one, optionally a first and a second, auxiliary image deriving from said first image (11) and/or second image (12) or from a n-th image of said first set of images and/or from a corresponding n-th image of said second set of images.

According to a further non-limiting aspect, said electronic combination is an electronic combination of a first image (11) and of a second image (I2) acquired at a same time instant, or is an electronic combination of a first set of images and of a second set of images wherein a n-th image of said first set of images is acquired at a same time instant of the corresponding n-th image of said second set of images, and/or wherein said first image (11) and said second image (I2) are acquired at a same time instant.

According to a further non-limiting aspect, said device for composite vision (100) is configured to allow electronically generating said composite image (I) in a substantially real time with an instant of time of said first image (11) and of said second image (12) or to allow electronically generating the set of composite images such that a n-th image of the set of composite images is generated in a substantially real time with the instant of time of generation of a corresponding n-th image of the first set of images and with a corresponding n-th image of the second set of images.

According to a further non-limiting aspect, in said method, the electronic generation of said composite image (I) comprises a juxtaposition of said first image (11) and of said second image (12) or a n-th image of said first set of images with a corresponding n-th image of said second set of images, or the electronic generation of a n-th composite image of said set of composite images comprises a juxtaposition of at least one, optionally a first and a second, auxiliary image deriving from said first image (11) and/or second image (12) or from a n-th image of said first set of images and/or from a corresponding n-th image of said second set of images.

According to a further non-limiting aspect, in said method, electronically generating said at least a composite image (I) or set of composite images comprises combining electronically the first image (11) and the second image (12), or combining electronically the images of a first set of images and of a second set of images in a way such that a n-th image of said first set of images is acquired at a same time instant of the corresponding n-th image of said second set of images.

According to a further non-limiting aspect, in said method, the electronic generation of the at least a composite image (I) is carried out in a substantially real time with an instant of time of generation of said first image (11) and of said second image (12) or the electronic generation of the set of composite images is such that a n-th image of the set of composite images is generated in a substantially real time with the instant of time of generation of a corresponding n-th image of the first set of images and with a corresponding n-th image of the second set of images.

According to a further non-limiting aspect, said device for composite vision (100) comprises a data processing unit (103) operatively connected with said first camera (101) and with said second camera (102), and receiving in use a first images signal (S1) from said first camera (101) and a second images signal (S2) from said second camera (102).

According to a further non-limiting aspect, said data processing unit (103) is configured to electronically generate said composite image (I) or said set of composite images.

According to a further non-limiting aspect, said method comprises transmitting to a data processing unit (103) of said device for composite vision (100) a first image signal (S1) from said first camera (101) and a second image signal (S2) from said second camera (102).

According to a further non-limiting aspect, in said method, the electronic generation of said at least a composite image (I) or set of composite images is carried out by means of said data processing unit (103).

According to a further non-limiting aspect, said data processing unit (103) is configured to identify said predefined portion of said vehicle (1) or to receive a control signal representative of said predefined portion of said vehicle (1) and to perform a flipping, optionally a mirror-like flipping, of at least one between said first image (11) or first set of images and said second image (12) or said second set of images, or a spatial rearrangement of a juxtaposition between said first image (11) or first set of images and said second image (12) or said second set of images, in function of said predefined position or of said control signal.

According to a further non-limiting aspect, said flipping or said spatial rearrangement determining the generation of said at least a first auxiliary image and/or of said second auxiliary image.

According to a further non-limiting aspect, said method comprises identifying, by means of said data processing unit (103) said predefined portion of said vehicle (1) or comprises transmitting to said data processing unit (103) a control signal representative of said predefined portion of said vehicle (1), and comprises performing, by means of said data processing unit (103), a flipping, optionally a mirror-like flipping, of at least one between said first image (11) or first set of images and said second image (12) or said second set of images, or a spatial rearrangement of a juxtaposition between said first image (11) or first set of images and said second image (12) or said second set of images, in function of said predefined position or of said control signal.

According to a further non-limiting aspect, in said method, said flipping or said spatial rearrangement determines the generation of said at least a first auxiliary image and/or of said second auxiliary image.

According to a further non-limiting aspect, said first camera (101) and said second camera (102) have a respective first framing axis (X) and second framing axis (Y).

According to a further non-limiting aspect, said first framing axis (X) is substantially inclined or not aligned with respect to said second framing axis (Y).

According to a further non-limiting aspect, said first framing axis (X) is arranged substantially at 90° with respect to said second framing axis (Y) or said first framing axis (X) is substantially counterposed to said second framing axis (Y).

According to a further non-limiting aspect, in said method, arranging said first camera (101) and said second camera (102) in at least a first reciprocal positional relation in correspondence of at least a first predefined portion of said vehicle (1), comprises arranging said first camera (101) and said second camera (102) in such a way that said first framing axis (X) of said first camera (101) is substantially inclined or not aligned with respect to a second framing axis (Y) of said second camera (102).

According to a further non-limiting aspect, in said method the arrangement is such that the first framing axis (X) is arranged substantially at 90° with respect to said second framing axis (Y) or in such a way that said first framing axis (X) is substantially counterposed to said second framing axis (Y).

According to a further non-limiting aspect, in said device for composite vision (100), said data processing unit (103) comprises at least an output operatively connected with a monitor (104), and is configured to transmit said composite image (I) or said set of composite images on said output toward said monitor (104).

According to a further non-limiting aspect, said method comprises connecting operatively said data processing unit (103) with a monitor (104) by means of an output of the data processing unit (103) and comprises transmitting said composite image (I) or said set of composite images on said output toward said monitor (104).

According to a further non-limiting aspect, said device for composite vision (100) comprises at least a first optical radiation emitter (105) operatively coupled to at least one between said first camera (101) and said second camera (102), optionally a first and a second optical radiation emitter (105, 106), operatively coupled respectively to said first camera (101) and to said second camera (102).

According to a further non-limiting aspect, the assembly formed by said at least a first optical radiation emitter (105) and the at least one between said first camera (101) and said second camera (102), optionally the assembly formed by said first and second optical radiation emitter (105, 106) and said first and second camera (101, 102), is configured to measure a time of flight (TOF) of an optical signal transmitted from said first optical radiation emitter (105) up to said first camera (101) and/or said second camera (102), or an optical signal transmitted from the first optical radiation emitter (105) up to said first camera (101) and from said second optical radiation emitter (106) up to said second camera (102).

According to a further non-limiting aspect, said optical signal is reflected by an object (K) placed within said field of view (FOV1, FOV2) of said first camera (101) and/or of said second camera (102).

According to a further non-limiting aspect, said method comprises providing at least a first optical radiation emitter (105) operatively coupled to at least one between said first camera (101) and said second camera (102), optionally a first and a second optical radiation emitter (105, 106), operatively coupled respectively to said first camera (101) and to said second camera (102).

According to a further non-limiting aspect, the method comprises measuring a time of flight (TOF) of an optical signal transmitted from said first optical radiation emitter (105) up to said first camera (101) and/or said second camera (102), or of an optical signal transmitted by the first optical radiation emitter (105) up to said first camera (101) and from said second optical radiation emitter (106) up to said second camera (102).

According to a further non-limiting aspect, said optical signal is reflected by an object (K) placed within said field of view (FOV1, FOV2) of said first camera (101) and/or of said second camera (102).

According to a further non-limiting aspect, said first optical radiation emitter (105) and/or said second optical radiation emitter (106) is configured to emit an optical signal in the visible, and/or in the infrared and/or in the ultraviolet domain.

According to a further non-limiting aspect, in said method, said optical signal transmitted by said first optical radiation emitter (105) and/or said optical signal transmitted by said second optical radiation emitter (106) is an optical signal in the visible and/or in the infrared and/or in the ultraviolet domain.

According to a further non-limiting aspect, said first optical radiation emitter (105) and/or said second optical radiation emitter (106) is configured to emit an optical signal pulsed and/or modulated.

According to a further non-limiting aspect, said method comprises transmitting by means of said first optical radiation emitter (105) and/or by means of said second optical radiation emitter (106) an optical signal pulsed and/or modulated.

According to a further non-limiting aspect, said first optical radiation emitter (105) and/or said second optical radiation emitter (106) is wavelength tunable inside at least one among said visible, infrared and/or ultraviolet domain.

According to a further non-limiting aspect, the method comprises syntonizing said first optical radiation emitter (105) and/or said second optical radiation emitter (106) in at least one among said visible, infrared and/or ultraviolet domain.

According to a further non-limiting aspect, said device for composite vision (100) is configured to allow an electronic comparison, optionally said data processing unit (103) is configured to carry out an electronic comparison, between said time of flight (TOF) and at least a first predefined threshold of time of flight (TOF_th).

According to a further non-limiting aspect, said device for composite vision (100) is configured to activate at least a signaling device (108), of acoustic type and/or of visual type, as a result of said electronic comparison, preferably when said time of flight (TOF) is lower than said threshold of time of flight (TOF_th).

According to a further non-limiting aspect, said method comprises electronically comparing, optionally through said data processing unit (103), said time of flight (TOF) and at least a first predefined threshold of time of flight (TOF_th).

According to a further non-limiting aspect, said method comprises activating, optionally through said data processing unit (103), at least a signaling device (108), of acoustic type and/or of visual type, as a result of said electronic comparison, preferably when said time of flight (TOF) is lower than said threshold of time of flight (TOF_th).

According to a further non-limiting aspect, in said device and/or in said method, the field of view (FOV1) of said first camera (101) is equal to field of view (FOV2) of said second camera and/or at least one between said first camera (101) and said second camera (102) is configured to allow a variation of a width (α1, α2) of the respective field of view (FOV1, FOV2).

According to a further non-limiting aspect, in said device for composite vision (100), said data processing unit (103) is configured to automatically identify the presence of said at least an object (K) by means of an image identification algorithm, preferably of a neural network type and more preferably of a convolutional neural network (CNN) type.

According to a further non-limiting aspect, said method comprises electronically and automatically identifying, by means of said data processing unit (5), the presence of said at least an object by means of an image identification algorithm, preferably of a neural network type and more preferably of a convolutional neural network (CNN) type.

According to a further non-limiting aspect, said image identification algorithm a single-stage type algorithm or is a two-stage type algorithm.

In accordance to a further independent aspect is herein described the use of the device for composite vision (100) according to one or more of the previously described aspects to promote an increase of the view of a user of a vehicle.

### Figures

The detailed description will refer to a preferred embodiment of the device and method object of the present disclosure. The detailed description makes further reference to the annexed figures, a brief description thereof is hereinafter provided.
Figure 1 shows a schematic representation of a device for composite vision object of the present disclosure.
Figure 2 and figure 3 show a lateral view and a plane view of a road vehicle, provided with a device for composite vision object of the present disclosure.
Figure 4 shows a schematic representation of a particular embodiment of the device for composite vision object of the present disclosure, wherein is further present an optical radiation emitter.

### Detailed description

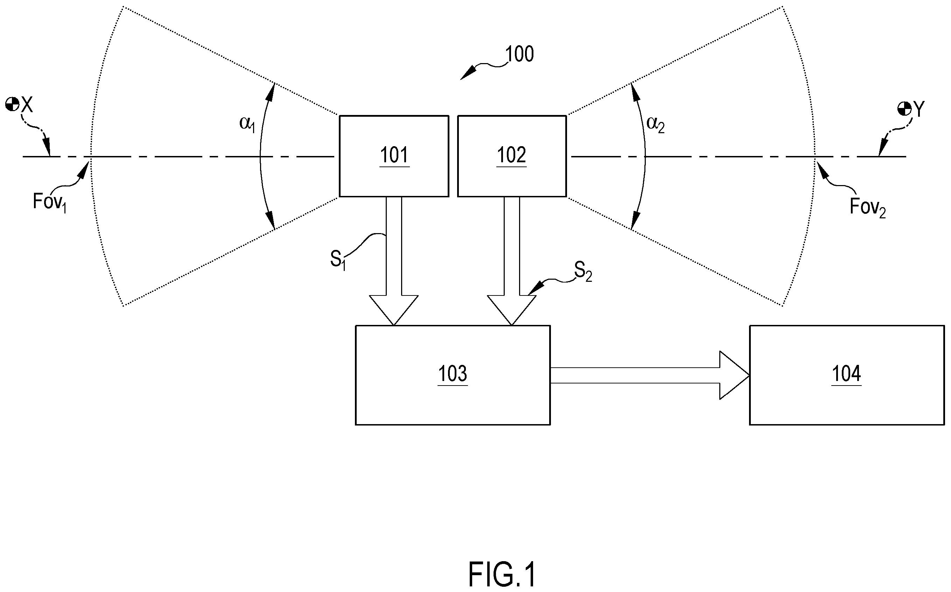

Figure 1 shows a first embodiment of a device for composite vision 100. The numerical references 101, 102 identify respectively a first and a second camera.

Each one of the two cameras comprises an optical sensor, that is free from refractive/reflecting elements. The first camera 101 and the second camera 102 are free from lenses with great wide-angle power.

The optical sensor is a sensor sensitive to an optical radiation.

For the purposes of the present disclosure the optical radiation comprises at least one among a radiation belonging to the visible spectrum, and therefore approximately comprised in the range [310 ÷ 1100] nm, or anyway in the range [350 ÷ 750] nm, an ultraviolet radiation (wavelength lower than 350nm) or an infrared radiation (wavelength greater than 1100nm).

In a preferred embodiment, non-limiting, the optical sensor has sensitivity optimized for the visible spectrum. Further embodiments of the device for composite vision 100 object of the present disclosure can be provided with an optical sensor the sensitivity thereof is optimized for the infrared spectrum and/or for the ultraviolet spectrum.

The optical sensor is a matrix-type sensor, provided with a plurality of photoreceptors sensitive to a particular wavelength, in particular red, green and blue. Such photoreceptors result in a plurality of pixels arranged on multiple rows and multiple columns orthogonal to the rows. Preferably each pixel is a RGB pixel.

From the electronic point of view the optical sensor can use CCD technology or CMOS technology, anyway such type of technology shall not be intended as limiting since organic type sensors could be used, for example. The optical sensor can integrate a circuitry capable of allowing a variation of a frame rate, and/or capable of allowing an automatic control of the exposure (AEC) and/or of the white (AWB), and/or capable of allowing an automatic band filter (ABF), and/or capable of compensating a 50/60Hz lighting flickering, and/or allowing an automatic black level control (ABLC). The optical sensor 3 can operate in global shutter mode (that is with simultaneous and integral activation/deactivation of all the photoreceptors) or in rolling shutter mode (that is by activating one after another the rows of photoreceivers which compose it). Non-limiting examples of optical sensors usable for the automotive application are produced by OmniVision Technologies.

Each one of the two cameras 101, 102 has an its own field of view, indicated in figure 1 with FOV1 and FOV2.

The cameras 101, 102 can be characterized by a fixed field of view FOV1, FOV2; in other embodiments, the cameras 101, 102 can be characterized by a field of view FOV1, FOV2 whose width is variable. In figure 1, for example, α1 identifies the width angle of the first field of view FOV1, while α2 identifies the width angle of the second field of view FOV2.

Although in figure 1 is represented a technical solution wherein α1 is almost equal to α2, this shall not be considered limiting. In fact, the widths of the fields of view FOV1, FOV2 can be significantly different from each other.

The optical sensor of the camera has an its own central axis that becomes - for the purposes of the present disclosure - the optical axis of the camera. The reference X identifies the optical axis of the first camera 101; the reference Y identifies the optical axis of the second camera 102.

Typically, such field of view has a width (angle α1, for the first camera 101, angle α2, for the second camera 102) that is fixed, but this solution shall not be intended in a limiting way. In fact, it is possible to provide the device for composite vision 100 object of the present disclosure with at least a, between the aforementioned cameras, with characteristics such that they can vary the width of its own field of view.

The device for composite vision 100 object of the present disclosure is configured to be connected with a data processing unit 103. The data processing unit 103 can be part of the device herein described or be an outer data processing unit.

The data processing unit 103 can comprise a general-purpose type processor, a dedicated processor or integrated circuit (ASIC), an FPGA, and/or a programmable logic controller. The data processing unit 103 can be a data processing unit of a Raspberry.

The data processing unit 103 can be configured to carry out a program that comprises software code portions written in any programming language, for example in Python.

The data processing unit 103 can comprise, or be operatively connected with, a memory.

The first camera 101 and the second camera 102 are operatively connected (electrically and/or optically) with the data processing unit 103. The connection that there is between the first camera 101 and the second camera 102 and the data processing unit 103 can be wired or at least partially of a wireless type.

Figure 1 shows the presence of a monitor 104 operatively (electrically and/or optically) connected with an output of the data processing unit 103. On the output of the data processing unit 103 in use is transmitted a signal that is such as to determine the representation of images on the monitor 104.

In an embodiment that shall not be considered as limiting, the monitor 104 is of LCD-type. The monitor 104 can be flanked or replaced by a sound and/or light emitter, for the emission of an acoustic and/or visual warning signal. The monitor 104 may alternatively be a LED-, plasma-, OLED-, e-ink-, etc.

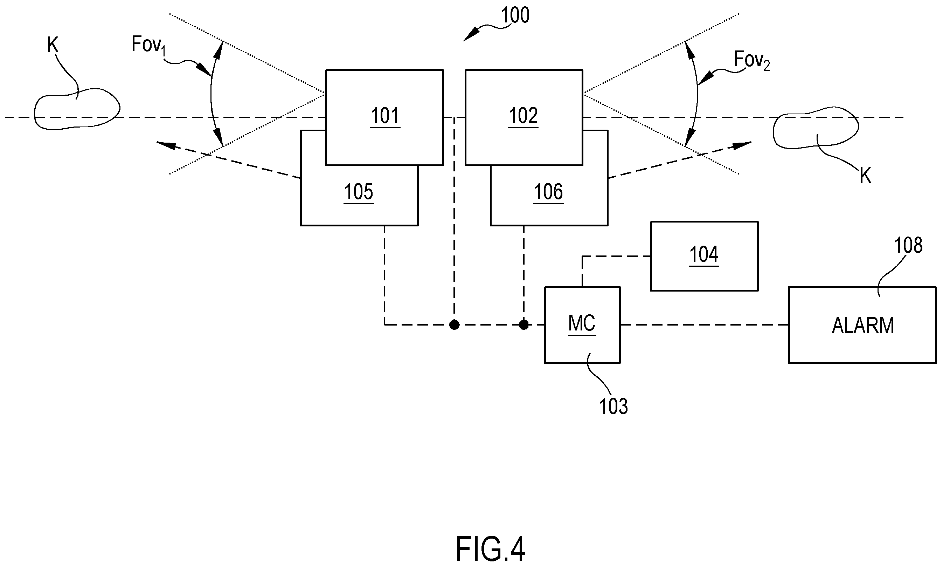

Such sound and/or light emitter is identified in figure 4 with the numerical reference 108 and will be better described below.

The first and the second camera 101, 102 are configured to be arranged in at least a first predefined positional relation on at least a first predefined portion of a vehicle 1.

With respect to known solutions, the first and the second camera 101, 102 are arranged in substantial proximity in a same point of the first portion of the vehicle 1, and in particular are conveniently arranged inside a same casing or body. This technical solution differs from known solutions wherein, for example in correspondence of the left and right front portions of the vehicle, there can be a first camera on the left and a second camera on the right. In particular the cameras can be arranged in such a way to be juxtaposed or superimpose and potentially to be one in contact with the other.

The positional relation that there is between the first and the second camera 101, 102 can be fixed, or vary by effect of a translation or of a roto-translation carried out by the first camera 101 with respect to the second camera 102 or carried out by the second camera 102 with respect to the first camera 101 or still carried out simultaneously by both the cameras.

The diction "at least a first predefined portion of a vehicle 1" is provided because in an embodiment, non-limiting, the assembly formed by the first camera 101 and by the second camera 102 is arranged in a fixed way on the vehicle 1. In a further embodiment, alternative to the preceding one, the assembly formed by the first camera 101 and by the second camera 102 is arranged in a movable way on the vehicle 1.

In this latter case the device for composite vision 100 object of the present disclosure will comprise an actuator installed in a fixed position on the vehicle and having elements suitable to allow a rotation, a translation or a composite motion of roto-translation, of the assembly formed by the first camera 101 and by the second camera 102 with respect to the vehicle 1.

Through the actuator, the assembly formed by the first and second camera can be moved between a first position and a second position, different from the first one, on the same portion of vehicle, or can be moved between the first portion of the vehicle and a second portion of the vehicle, for example between a front portion and a lateral or central or rear portion of the vehicle.

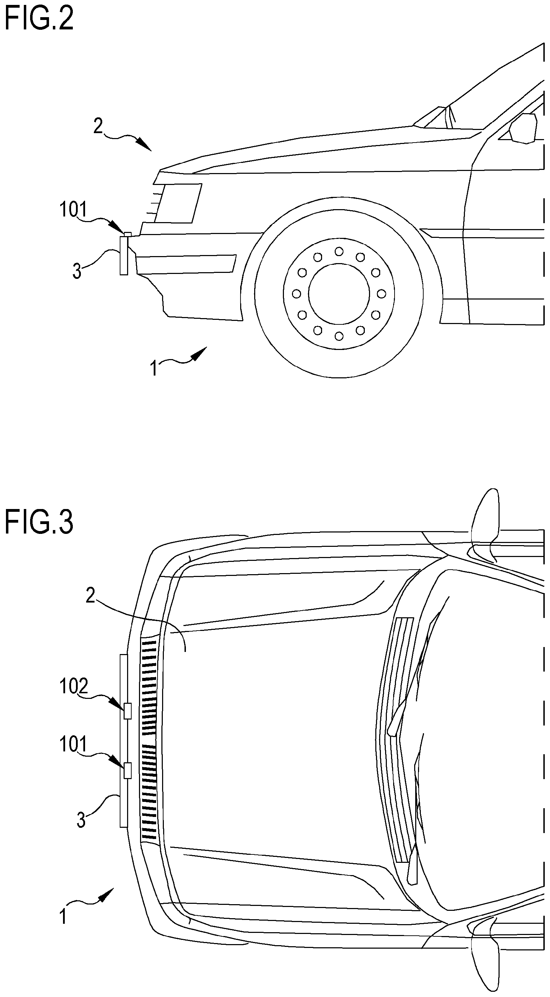

The predefined portion of a vehicle 1 is for example a peripheral portion. Figure 2 and figure 3 show in a schematic way a non-limiting technical installation solution wherein the first and the second camera are arranged in correspondence of a plate holder 3 arranged in turn on a bumper of the front portion 2 of the vehicle 1.

Although the vehicle schematically represented in figures 2 and 3 is a car, such type of vehicle shall not be considered as limiting. In fact, for the purposes of the present disclosure, a vehicle can be a land vehicle, for example, a bicycle, or anyway a vehicle without an engine, a car, an ATV, a motorcycle, a commercial vehicle, an earth-moving machine, or a naval or air vehicle.

The first camera 101 electronically generates at least a first image I1. Considering a temporal evolution, the first camera 101 generates a first set of images, containing for example N images timed at regular intervals.

The second camera 102 electronically generates at least a second image I2. Considering a temporal evolution, the second camera 102 generates a second set of images, containing for example N images timed at regular intervals.

The device for composite vision 100 object of the present disclosure is configured to allow to electronically generate a composite image I. Considering the temporal evolution, is generated a set of N composite images.

The composite image I derives from an electronic combination of the first image I1 with the second image I2.

Each one n-th image of the set of composite images is the fruit of the electronic combination of the n-th image of the first set of images with the corresponding n-th image of the second set of images.

In view of the preceding description, it appears therefore clear that the present disclosure shows a method that comprises:
- providing a composite vision device 100 as the one herein described, and in particular comprising at least a first camera 101 having at least a respective first field of view FOV1 and a second camera 102 having at least a respective second field of view FOV2, and arranging said first camera 101 and said second camera 102 in at least a first reciprocal positional relation in correspondence of a predefined portion of the vehicle 1,
- framing a first portion of surrounding environment by means of said first camera 101 and a second portion of surrounding environment at least partially different, preferably substantially different, with respect to said first portion of surrounding environment by means of said second camera 102;
- electronically generating, by means of said first camera 101, at least a first image I1 or first set of images of said first portion of surrounding environment and electronically generating, by means of said second camera 102, at least a second image I2 or second set of images, of said second portion of surrounding environment,
- electronically generating at least a composite image I or a set of composite images, electronically combining said first image 11, or first set of images, with said second image I2, or second set of images, and the composite image I promotes an increase of the view of the user.

As indicated in figure 2 and in figure 3 the optical axes X, Y of the first camera 101 and of the second camera 102 are not aligned, and this - also in relation to the width of the respective fields of view FOV1, FOV2 - determines that the first camera 101 frames a first portion of environment around the vehicle, while the second camera 102 frames a second portion of environment, preferably completely different from the first one.

The annexed figures show a non-limiting example of installation configuration wherein the first and the second camera 101, 102 are installed in such a way to have the respective optical axes opposed to each other (180°). Further installation solutions on board of the vehicle, not shown in the annexed figures, provide the possibility of arranging the first camera 101 and the second camera 102 in such a way that the respective optical axes X, Y are for example arranged at 90° the one with respect to the other.

A particular embodiment of the device object of the present disclosure provides for the presence of at least a first optical radiation emitter 105. In particular, figure 4 shows the presence of a first optical radiation emitter 105 and of a second optical radiation emitter 106. For the sake of simplicity, the position of the first optical radiation emitter 105 can be considered substantially coinciding with the position assumed by the first camera 102. The position of the second optical radiation emitter 106 can be considered substantially coinciding with the position assumed by the second camera 102.

The first optical radiation emitter 105 illuminates a portion of space surrounding the vehicle substantially coinciding with the field of view FOV1 of the first camera 101 with an optical radiation.

The second optical radiation emitter 106 illuminates with an optical radiation a portion of space surrounding the vehicle substantially coinciding with the field of view FOV2 of the second camera 102.

In a non-limiting embodiment, the first and the second optical radiation emitter 105, 106 emit an optical radiation along two directions substantially opposed and preferably coincident with the optical axis X (first optical radiation emitter 105) and with the optical axis Y (second optical radiation emitter 106).

The first and the second optical radiation emitter 105, 106 can emit a substantially modulated or pulsed optical radiation, so as to allow the electronic measurement of a time of flight.

The assembly formed by the first optical radiation emitter 105 and by the first camera 101, and/or the assembly formed by the second optical radiation emitter 106 and by the second camera 102, realizes a time of flight camera, that is capable of measuring a time of flight (TOF) that passes between the emission of an impulse of optical radiation, the reflection of the latter on an object K arranged within the field of view FOV1, FOV2 of the respective camera, and the receipt of the impulse on the respective camera.

The first and/or the second optical radiation emitter 105, 106 can emit an optical signal (optical radiation) in the visible spectrum, in the ultraviolet spectrum and/or in the infrared spectrum.

In an embodiment, the first and/or the second optical radiation emitter 105, 106 can be a LED or an emitter with emission of coherent optical radiation (LASER).

The first and/or the second optical radiation emitter 105, 106 can be configured to emit optical radiation whose center wavelength is substantially stable in time, or alternatively can be wavelength tunable.

The optical radiation emitter can emit a radiation belonging to the visible spectrum, and therefore approximately comprised in the range [310 ÷ 1100] nm, or anyway in the range [350 ÷ 750] nm, and/or an ultraviolet radiation (wavelength less than 350nm), and/or an infrared radiation (wavelength greater than 1100nm).

The use of the device 1 in accordance to the embodiment herein described, that therefore is capable of implementing a LIDAR technology, advantageously allows also to estimate the position of objects detected with optical radiations transmitted and then received through a deviation of optical path provided by the at least one first optical radiation diverter element, and/or where present, by the second optical radiation diverter element. The data processing unit 103 in this case can be configured to determine a sending of a warning signal if there is the detection of an object arranged at a distance lower with respect to a predetermined threshold, or if such object approaches the device herein described, in particular the first camera 101, and/or the second camera 102, with a speed greater with respect to the threshold speed.

In view of the above it appears clear that through the data processing unit 103 it is possible to realize an electronic comparison between the time of flight TOF of the impulse that from the optical radiation emitter is reflected by the object K and reaches the respective camera and at least a first predefined threshold of time of flight TOF_th.

The data processing unit 103 loads, or stores, the above-mentioned first predefined threshold of time of flight TOF_th in such a way that it is possibly modifiable, by a user or by the manufacturer of the herewith described device.

If TOF ≤ TOF_th, then a signaling device 108, of acoustic type and/or of visual type, is activated for alerting the user of an excessive proximity of the object K to the vehicle.

If TOF > TOF_th, such signaling device 108 is not activated.

The activation of the signaling device 108 takes place conveniently by means of an appropriate signal transmitted by an output of the data processing unit 103 to the signaling device.

Concerning the measurement of the threshold speed, through the assembly formed by first and/or second optical radiation emitter 105, 106 and by the respective first and/or second camera 101, 102, and by means of the data processing capacity of the data processing unit 103, can be measured a Doppler variation of the optical signal such as to determine whether the object K gets closer with an excessive speed.

Defined V_th the threshold speed and defined V the speed of approximation of the object K, if V ≤ V_th, the signaling device 108 is not activated; contrarily, if V > V_th, the signaling device is electronically activated.

More in particular, the composite image I comprises a juxtaposition of the first image I1 and of the second image I2; with the evolution of the time, the set of composite images is such that the n-th composite image I of the N composite images derives from a juxtaposition of the n-th image of the first set of images with the corresponding n-th image of the second set of images.

As it will be clear from the following description, according to the arrangement of the first camera 101 and second camera 102 in relation to the user on the vehicle 1, and in particular in relation to the direction of observation of the aforementioned user, there could be necessary to provide for a flipping, in particular mirror-like, of at least one between the first image 11, or first set of images, and the second image I2, or second set of images.

Let's assume for example the case wherein the first and the second camera 101, 102 are arranged in correspondence of the front license plate support of the vehicle 1 to frame a surrounding environment on the left and right of the front portion of the vehicle, in such a way to extend the view of the user in case, for example, the vehicle gets closer to a crossing covered by a corner of a building.

In this case, in the hypothesis wherein the first camera 101 frames the portion at the left of the vehicle and the second camera 102 frames the portion at the right of the vehicle, the juxtaposition of the images will not necessitate of flippings, since it will be sufficient to create one or more composite images I wherein the image of the first camera 101 is arranged on the left of the image of the second camera 102 to produce on the monitor 106 a visual representation corresponding to the one that the user would have by rotating the head from the left to the right in a position corresponding to that of the front license plate support.

Let's assume another example, wherein the first and the second camera 101, 102 are arranged in correspondence of the rear license plate support of the vehicle 1, to frame a surrounding environment on the left and right of the rear portion of the vehicle.

In this case, in the event that wherein the first camera 101 frames the portion on the left of the vehicle and the second camera 102 frames the portion on the right of the vehicle, the juxtaposition order of the images shall be variated with respect to the previous case, in particular in case there is the wish to represent the situation that the user would observe rotating of 180° with respect to the traditional driving position. In fact, the image produced by the first camera 101 should be arranged on the right, and the image produced by the second camera should be on the left. Each one of the images should be further subjected to a flipping.

In a non-limiting embodiment, the data processing unit 103 can be configured to identify the predefined portion of the vehicle 1 in correspondence thereof the cameras 101, 102 are installed, or to receive a control signal representative of said predefined portion of the vehicle 1.

The control signal can conveniently be an electric signal received in input from the data processing unit 103 during the installation step of the device herein described.

In relation thereto, the data processing unit 103 can be configured to carry out a flipping, optionally a mirror-like flipping, of at least one between said first image I1 or first set of images and said second image I2 or said second set of images, or a spatial rearrangement of the juxtaposition between said first image I1 or first set of images and said second image I2 or said second set of images, in function of the predefined position or of said control signal.

In this case, the flipping or the spatial rearrangement determine the generation of at least a first auxiliary image, associated to the first camera 101 and therefore to the first image I1 or to the first set of images, and a second auxiliary image, associated to the second camera 102 and therefore to the second image I2 or to the second set of images.

Therefore, the device for composite vision 100 object of the present disclosure is configured to allow a combined view of the images provided by the first camera 101 and by the second camera 102, and such view is congruent in terms of directional perception for the user of the vehicle.

In a particular embodiment, the data processing unit 103, in order to automatically identify the presence of at least an object, and in particular to automatically identify the presence of the approaching object, exploits in particular a neural network and even more preferably exploits a neural network of convolutional type (CNN).

The image identification algorithm executed by the data processing unit 103, according to the case, can be an algorithm of a single-stage type or of a two-stage type. Non-limiting examples of the aforementioned algorithms include Yolo, Haar Cascade.

The device for composite vision 100 object of the present disclosure and the corresponding method here described do not need delicate optical devices such as refractive and/or reflecting elements and/or lenses with great wide-angle power, and therefore are economical and less delicate with respect to determined devices of the known art wherein there is the presence of prisms and/or mirrors.

The absence of lenses with great wide-angle power reduces the need of high resolutions for the first and the second camera 101, 102 and reduces the need of relevant image processings by the data processing unit 103.

In case the first field of view FOV1 and/or the second field of view FOV2 respectively of the first camera 101 and/or of the second camera 102 shall be increased with respect to what is provided by the camera, no refractive/reflecting elements and/or lenses with great wide-angle power are applied, but there will be a potential rotation / translation of the camera with respect to an original position thereof.

The invention is not limited to the embodiments of the figures; for this reason, the numbers and reference signs in the claims are provided with the sole purpose of increasing the intelligibility thereof, and do not have limiting character.

It is finally clear that to the object of the present disclosure can be applied additions, modifications or variants, obvious for a skilled technician, without for this departing from the scope of protection provided by the annexed claims.

## Claims

1. Device for composite vision (100), comprising at least a first camera (101) having at least a respective first field of view (FOV1) and a second camera (102) having at least a respective second field of view (FOV2),
wherein the first camera (101) and the second camera (102) are configured to be arranged in at least a first reciprocal positional relation in correspondence of at least a first predefined portion of a vehicle (1), in such a way to frame a first portion of surrounding environment and a second portion of surrounding environment at least partially different, preferably substantially different, with respect to said first portion of surrounding environment,
said first camera (101) being configured to electronically generate at least a first image (11) or first set of images of said first portion of surrounding environment, said second camera (102) being configured to electronically generate at least a second image (12) or second set of images of said second portion of surrounding environment,
said device for composite vision (100) being configured to allow to electronically generate at least a composite image (I) or a set of composite images, deriving from an electronic combination of said first image (11), or first set of images, with said second image (12), or second set of images, to promote an increase of the view of a user of said vehicle (1).

2. Device for composite vision (100) according to claim 1, wherein said predefined portion of said vehicle (1) is a peripheral portion of said vehicle, for instance a front or rear peripheral portion of said vehicle (1),
wherein said composite image (I) comprises a juxtaposition of said first image (11) and of said second image (12) or a n-th image of said first set of images with a corresponding n-th image of said second set of images, or comprises a juxtaposition of at least one, optionally a first and a second, auxiliary image deriving from said first image (11) and/or second image (12) or from a n-th image of said first set of images and/or from a corresponding n-th image of said second set of images,
and wherein said electronic combination is an electronic combination of a first image (11) and of a second image (12) acquired at a same time instant, or is an electronic combination of a first set of images and of a second set of images wherein a n-th image of said first set of images is acquired at a same time instant of the corresponding n-th image of said second set of images, and/or wherein said first image (11) and said second image (12) are acquired at a same time instant,
preferably wherein said device for composite vision (100) is configured to allow to electronically generate said composite image (I) in substantially real time with a time instant of said first image (11) and of said second image (12) or to allow to electronically generate the set of composite images in such a way that a n-th image of the set of composite images is generated substantially in real time with the time instant of generation of a corresponding n-th image of the first set of images and with a corresponding n-th image of the second set of images.

3. Device for composite vision (100) according to claim 1 or claim 2, comprising a data processing unit (103) operatively connected with said first camera (101) and with said second camera (102), and receiving in use a first signal of images (S1) from said first camera (101) and a second signal of images (S2) from said second camera (102);
said data processing unit (103) being configured to electronically generate said composite image (I) or said set of composite images.

4. Device for composite vision (100) according to claim 3, wherein said data processing unit (103) is configured to identify said predefined portion of said vehicle (1) or to receive a control signal representing said predefined portion of said vehicle (1) and to perform a flipping, optionally a mirror flipping, of at least one between said first image (11) or first set of images and said second image (12) or said second set of images, or a spatial re-organization of a juxtaposition between said first image (11) or first set of images and said second image (I2) or said second set of images, as a function of said predefined position or of said control signal, said flipping or said spatial re-organization determining the generation of said at least one first auxiliary image and/or of said second auxiliary image.

5. Device for composite vision (100) according to one or more of the preceding claims, wherein said first camera (101) and said second camera (102) have a respective first framing axis (X) and second framing axis (Y), and wherein said first framing axis (X) is substantially inclined or not aligned with respect to said second framing axis (Y), optionally wherein said first framing axis (X) is arranged substantially at 90° with respect to said second framing axis (Y) or wherein said first framing axis (X) is substantially counterposed to said second framing axis (Y).

6. Device for composite vision (100) according to one or more of the preceding claims when depending on claim 3, wherein said data processing unit (103) comprises at least one output operatively connected with a monitor (104), and is configured to transmit said composite image (I) or said set of composite images on said output towards said monitor (104),
and/or wherein said first camera (101) and said second camera (102) are enclosed in a single body and/or lie substantially at a same position of said at least a first predefined portion of said vehicle (1) and/or are substantially positioned one in contact with the other or substantially superimposed or juxtaposed.

7. Device for composite vision (100) according to one or more of the preceding claims, comprising at least one first optical radiation emitter (105) operatively coupled to at least one between said first camera (101) and said second camera (102), optionally a first and a second optical radiation emitter (105, 106), operatively coupled respectively to said first camera (101) and to said second camera (102),
and wherein the assembly formed by said at least a first optical radiation emitter (105) and the at least one between said first camera (101) and said second camera (102), optionally the assembly formed by said first and second optical radiation emitter (105, 106) and said first and second camera (101, 102), is configured to measure a time of flight (TOF) of an optical signal transmitted from said first optical radiation emitter (105) up to said first camera (101) and/or said second camera (102), or an optical signal transmitted from the first optical radiation emitter (105) up to said first camera (101) and from said second optical radiation emitter (106) up to said second camera (102), said optical signal being reflected by an object (K) positioned into said field of view (FOV1, FOV2) of said first camera (101) and/or of said second camera (102).

8. Device for composite vision (100) according to claim 7, configured to allow an electronic comparison, optionally wherein said data processing unit (103) is configured to carry out an electronic comparison, between said time of flight (TOF) and at least a first predefined flight time threshold (TOF_th), and to activate at least a signaling device (108), of an acoustic type and/or visual type, as a result of said electronic comparison, preferably when said time of flight (TOF) is lower than said flight time threshold (TOF_th).

9. Device for composite vision (100) according to one or more of the preceding claims, wherein said first camera (101) and said second camera (102) are arranged in substantial proximity, preferably in substantial proximity of a same point of said first predefined portion of said vehicle (1), and/or wherein said device for composite vision (100) comprises a casing or body, said casing or body housing said first camera (101) and said second camera (102).

10. Method for promoting an increase of the view of a user, in particular of a user of a vehicle (1), the method comprising:
- providing a device for composite vision (100), optionally a device for composite vision (100) according to one or more of the preceding claims, comprising at least a first camera (101) having at least a respective first field of view (FOV1) and a second camera (102) having at least a respective second field of view (FOV2), and arranging said first camera (101) and said second camera (102) in at least a first reciprocal positional relation in correspondence of at least a first predefined portion of said vehicle (1),
- framing a first portion of surrounding environment by means of said first camera (101) and a second portion of surrounding environment at least partially different, preferably substantially different, with respect to said first portion of surrounding environment by means of said second camera (102);
- electronically generating, by means of said first camera (101), at least a first image (11) or first set of images of said first portion of surrounding environment and electronically generating, by means of said second camera (102), at least a second image (12) or second set of images, of said second portion of surrounding environment,
- electronically generating at least a composite image (I) or a set of composite images, combining electronically said first image (11), or first set of images, with said second image (12), or second set of images, said composite image (I) promoting an increase of the view of said user.

11. Method according to claim 10, wherein said predefined portion of said vehicle (1) is a peripheral portion of said vehicle, for instance a peripheral front or rear portion of said vehicle (1),
wherein the electronic generation of said composite image (I) comprises a juxtaposition of said first image (11) and of said second image (12) or a n-th image of said first set of images with a corresponding n-th image of said second set of images, or wherein the electronic generation of a n-th composite image of said set of composite images comprises a juxtaposition of at least one, optionally a first and a second, auxiliary image deriving from said first image (11) and/or second image (12) or from a n-th image of said first set of images and/or from a corresponding n-th image of said second set of images,
and wherein electronically generating said at least one composite image (I) or set of composite images comprises electronically combining the first image (11) and the second image (12), or electronically combining the images of a first set of images and of a second set of images in such a way that a n-th image of said first set of images is acquired at a same time instant of the corresponding n-th image of said second set of images,
preferably wherein the electronic generation of the at least one composite image (I) is carried out substantially in real time with a time instant of generation of said first image (11) and of said second image (12) or wherein the electronic generation of the set of composite images is such that a n-th image of the set of composite images is generated substantially in real time with the time instant of generation of a corresponding n-th image of the first set of images and with a corresponding n-th image of the second set of images;
the method optionally comprising transmitting to a data processing unit (103) of said device for composite vision (100) a first image signal (S1) from said first camera (101) and a second image signal (S2) from said second camera (102), and wherein the electronic generation of said at least one composite image (I) or set of composite images is carried out by means of said data processing unit (103);
and/or optionally wherein the method comprises providing at least one first optical radiation emitter (105) operatively coupled to at least one between said first camera (101) and said second camera (102), optionally a first and a second optical radiation emitter (105, 106), operatively coupled respectively to said first camera (101) and to said second camera (102), the method comprising measuring a time of flight (TOF) of an optical signal transmitted from said first optical radiation emitter (105) up to said first camera (101) and/or said second camera (102), or of an optical signal transmitted from the first optical radiation emitter (105) up to said first camera (101) and from said second optical radiation emitter (106) up to said second camera (102), said optical signal being reflected from an object (K) positioned into said field of view (FOV1, FOV2) of said first camera (101) and/or of said second camera (102).

12. Method according to claim 10 or claim 11, comprising arranging said first camera (101) and said second camera (102) in at least one reciprocal positional relation and in substantial proximity in correspondence of said at least one first predefined portion of said vehicle (1), and/or comprising providing a casing or body, and comprises arranging said first camera (101) and said second camera (102) in said body or casing;
said method comprising arranging said body or casing in correspondence of said first predefined portion of said vehicle (1).
